# FASCICULE DE BREVET EUROPEEN

(11) **EP 1 441 584 B1**
(45) Date de publication et mention de la délivrance du brevet: **10.08.2005**
(21) Numéro de dépôt: 02779639.0
(22) Date de dépôt: 17.09.2002
(51) Int. Cl.: A01K 91/18

(54) **CAISSE DE RANGEMENT ET/OU DE PREPARATION DE LIGNE PALANGRE**
KASTEN ZUM STAUEN UND/ODER ZUM FERTIGMACHEN VON LANGLEINEN
CASE FOR LONGLINE STORAGE AND/OR PREPARATION

(30) Priorité: 17.09.2001 FR 0111986
(43) Date de publication de la demande: 04.08.2004
(73) Titulaire: Michon, Dominique, 44490 Le Croisic (FR)
(72) Inventeur: Michon, Dominique, 44490 Le Croisic (FR)
(74) Mandataire: Michelet, Alain
(86) Numéro de dépôt international: PCT/FR2002/003174
(87) Numéro de publication internationale: WO 2003/024208

(56) Documents cités:
- FR-A- 2 457 071

## Description

La présente invention concerne une caisse de rangement et/ou de préparation de ligne palangre.

Une ligne palangre peut comporter près d'un millier d'hameçons. Chaque hameçon est monté sur un avançon, lequel avançon est rattaché à une ligne mère dont le diamètre est de l'ordre de 3 à 4 fois celui de l'avançon.

Le document FR-2 457 071 décrit une caisse à palangre qui permet de ranger la ligne mère dans un bac ou coffre et d'installer chaque hameçon sur un présentoir ou magasin en forme de barrette.

Ces barrettes comportent une sorte de peigne constitué d'un ruban souple incisé, en caoutchouc. Chaque incision permet de loger et de maintenir par pincement le bas de l'avançon, à côté de l'hameçon. Le pincement se révèle parfois insuffisant pour maintenir correctement l'hameçon et son appât. L'effort de pincement ne peut pas non plus être trop important ; s'il est trop important, les appâts risquent de s'arracher au moment du départ du fait d'une accélération trop vive.

De plus, avec ce matériel, la ligne mère glisse directement sur le ruban en caoutchouc et de ce fait elle l'accroche à chaque noeud, d'où une certaine perturbation lors du filage.

La présente invention vise à perfectionner ce type de caisse pour remédier aux inconvénients précités.

Les améliorations apportées permettent aussi de mieux séparer les hameçons, de limiter les risques d'emmêlement et les risques d'arrachement des appâts lors du filage de la ligne.

La caisse selon l'invention comporte des moyens de stockage des hameçons et/ou des appâts, lesquels moyens comprennent - d'une part, au moins un râtelier constitué d'une bande souple en matériau du genre caoutchouc, cette bande est incisée pour permettre le rangement et le pincement de l'extrémité des avançons, et, - d'autre part, en plus, derrière ladite bande souple, sur la partie externe de la caisse, en aval, un support rigide en forme de râtelier, qui permet d'accrocher et de suspendre l'hameçon avec son appât éventuel, lequel hameçon est maintenu par son crochet ou le noeud, la hampe dudit hameçon étant disposée dans une encoche appropriée aménagée sur ledit râtelier support.

Selon l'invention, l'encoche réalisée dans le râtelier support, a une largeur qui est sensiblement supérieure au diamètre de la hampe de l'hameçon et sa profondeur est telle qu'elle permet de maintenir et de guider ladite hampe dans un plan vertical tout en lui permettant de se déplacer de façon pendulaire lors de l'opération de boëttage.

Selon une autre disposition de l'invention, le support fait également office de rampe de lancement lors du filage de la ligne et sa longueur, ainsi que la longueur de l'encoche sont de l'ordre de 10 à 15 mm.

Selon une autre disposition préférentielle de l'invention, les moyens de stockage comportent en plus, en avant de la bande souple, sur la partie interne de la caisse, un râtelier en forme de peigne qui fait office de rampe ou de tremplin pour la ligne mère, les fentes dudit râtelier ont une largeur qui correspond au diamètre des avançons pour permettre d'y loger ces demiers et de les protéger lors du filage de la ligne, lequel râtelier permet d'éviter l'entraînement accidentel de l'avançon par la ligne mère, il fait suivre audit avançon une trajectoire qui évite le frottement et les risques d'accrochage entre ladite ligne mère et le râtelier en forme de bande souple.

Selon un premier mode de réalisation, la caisse est constituée d'un coffre parallélépipédique et de montants qui s'étendent verticalement à chaque angle dudit coffre, lesquels montants sont en forme de cornière dont chaque aile a une section en forme de U, et pour cette caisse, les moyens de stockage constituant le magasin d'hameçons, sont en forme de barrettes rectilignes, lesquelles barrettes sont superposées entre lesdits montants, à claire-voie, formant entre elles des fenêtres par lesquelles passe la ligne mère de sorte que le filage peut s'effectuer de façon continue sans avoir à démonter les barrettes vides, chaque barrette comprend à ses extrémités, des moyens de positionnement et de guidage sur lesdits montants, lesquels moyens de guidage permettant d'installer la barrette soit dans le plan des parois dudit coffre, soit dans une position inclinée pour le filage, avec une inclinaison de l'ordre de 60° par rapport à la verticale, laquelle barrette comporte également, à sa partie supérieure, les moyens de rangement des hameçons et appâts selon le cas, lesquels moyens sont constitués de la bande souple logée dans une rainure de ladite barrette, laquelle bande souple est disposée entre une paroi externe, aménagée sous la forme d'un râtelier support muni de fentes pour le passage de chaque hampe, et un autre râtelier muni de fentes qui permettent de loger et de protéger les avançons.

Selon une autre disposition de l'invention, les barrettes sont en aluminium, constituées de deux profilés : un profilé supérieur qui permet le rangement des hameçons et appâts selon le cas, et un profilé inférieur qui fait office d'axe, coopérant avec les montants, lequel axe est aménagé pour verrouiller la barrette dans deux positions stables : une position stable verticale et une position stable pour le filage de la ligne, inclinée environ à 60° par rapport à la position verticale, le passage d'une position à l'autre étant obtenu par une déformation élastique des ailes desdits montants, provoquée par ledit axe, lequel axe est automatiquement verrouillé dans l'une ou l'autre de ses deux positions extrêmes.

Toujours selon l'invention, le râtelier en forme de bande souple, est associé à des moyens qui permettent de comprimer ou d'étirer ladite bande, selon les besoins, pour modifier l'effort de pincement au niveau des incisions, lesquels moyens consistent par exemple en un calage de ladite bande dans son logement après un choix approprié au niveau de sa longueur.

Selon un second mode de réalisation, la caisse est constituée d'un bac circulaire réalisé en matériau thermoplastique ou résine armée par exemple, et les moyens de stockage des hameçons sont aménagés au niveau du rebord supérieur dudit bac, lesquels moyens comprennent - une rainure circulaire ouverte, en contredépouille, pour loger le râtelier en forme de bande souple, et - d'une part, à l'extérieur de ladite bande, en aval, un râtelier support massif façonné directement au niveau du rebord pour suspendre les hameçons, et - d'autre part, à l'intérieur, en amont de ladite bande, un râtelier aménagé sur le rebord interne pour loger les avançons, formant en plus une surface arrondie pour guider la ligne mère.

Selon une autre disposition de l'invention, la rainure fendue permettant de loger la bande souple incisée, comporte une entrée en forme de rampe qui permet de glisser le bourrelet de ladite bande, et de l'enfiler dans la rainure sur tout le pourtour du rebord de la caisse, laquelle bande a une longueur choisie de façon à obtenir un pincement optimal des avançons, au niveau des incisions. Cette bande souple fait en quelque sorte office de gâchette ; c'est elle qui initialise et règle les conditions de départ de l'avançon.

Toujours selon l'invention, la paroi externe de la bordure de la caisse, sous le râtelier support, est aménagée sous la forme d'une paroi très lisse et très dure, afin d'éviter tout risque d'accrochage accidentel de la pointe de l'hameçon, au moment du filage, laquelle paroi s'étend sur une hauteur supérieure à la longueur des hameçons utilisés.

Selon une autre possibilité de l'invention, la caisse est réalisée en deux parties : une partie formant le bac proprement dit et une partie correspondant à une couronne, à caractère plus technique qui comporte des moyens en forme de rainure par exemple pour s'encliqueter sur le rebord du bac supérieur aménagé à cet effet, laquelle couronne pouvant aussi constituer une sorte de magasin complémentaire juxtaposable sur une autre couronne.

Selon une autre variante de réalisation, la caisse est associée à une tablette ou couronne de boëttage qui est munie sur sa périphérie, d'un râtelier servant de support pour des lests ou pour des flotteurs, et/ou de cloisons qui forment des logements destinés aux appâts vivants ou glacés.

L'invention sera encore détaillée à l'aide de la description suivante et des dessins annexés donnés à titre indicatif, et dans lesquels :
- la figure 1 représente une caisse à palangre selon un premier mode de réalisation de l'invention ;
- la figure 2 représente la section d'un montant ;
- la figure 3 représente schématiquement et partiellement, à une échelle plus grande que pour la figure 2, une portion de barrette en position normale de stockage, vue de côté et installée dans un montant ;
- la figure 4 représente une portion de la barrette comme figure 3, en position de filage de la ligne ;
- la figure 5 représente une portion d'une barrette rectiligne, vue en perspective ;
- la figure 6 représente le profilé inférieur d'une barrette, faisant office d'axe ;
- la figure 7 représente le profilé supérieur de la barrette ;
- la figure 8 représente, vues de côté et en coupe, des barrettes rectilignes installées entre les montants ;
- la figure 9 représente schématiquement, une variante de réalisation de la caisse à palangre, qui est en forme de bac circulaire ;
- la figure 10 représente en coupe, le détail du rebord de la caisse en forme de bac ;
- la figure 11 représente une caisse dont les capacités de stockage sont complétées par un magasin circulaire en forme de couronne, qui se positionne sur le rebord de ladite caisse ;
- la figure 12 représente une partie en coupe selon 12-12 d'une variante de réalisation de la caisse qui est constituée d'un bac et d'une couronne encliquetable ;
- la figure 13 représente une position de la couronne, vue de dessus ;
- la figure 14 représente une portion de la caisse ronde munie d'une tablette de boëttage en forme de couronne ;
- la figure 15 représente schématiquement les moyens d'assemblage de la tablette, sur le rebord de la caisse.

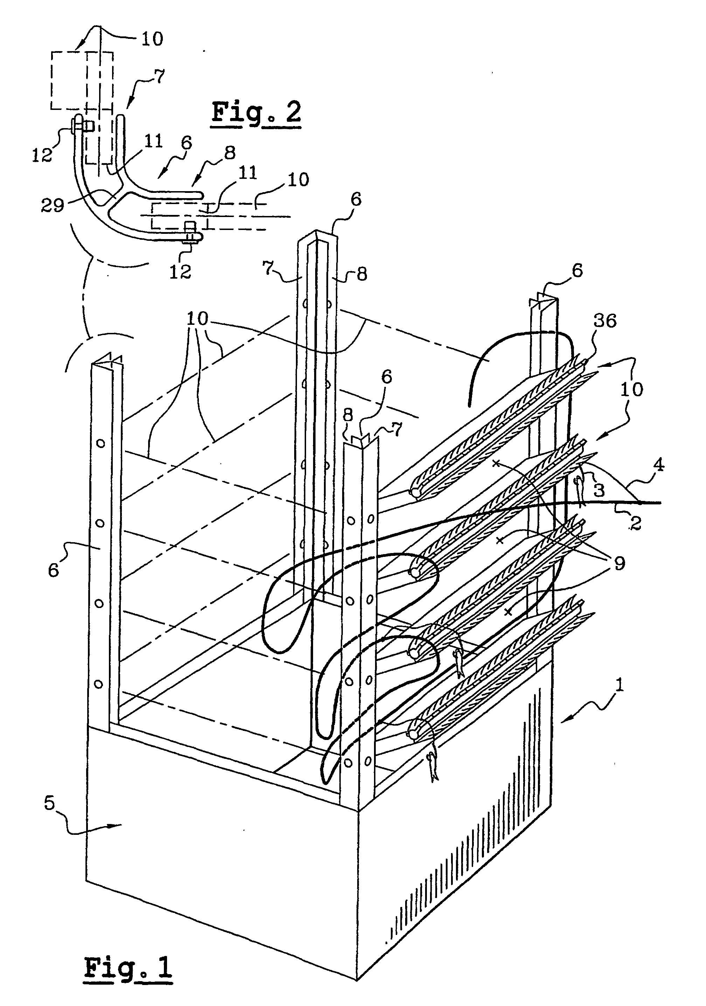

La caisse représentée schématiquement figure 1 correspond à un premier mode de réalisation. Cette caisse 1 permet de stocker une ligne palangre pélagique constituée d'une ligne mère 2 sur laquelle on trouve des hameçons 3 et des lests ou flotteurs, selon le cas, non représentés.

Chaque hameçon 3 est relié à la ligne mère 2 au moyen d'un avançon 4.

La caisse 1 est constituée d'un coffre parallélépipédique dans lequel est stockée la ligne mère 2. Ce coffre 5 est ouvert à sa partie supérieure et comporte dans chacun de ses angles, des montants 6 qui s'étendent verticalement. Ces montants 6 sont aménagés en forme de cornières et chaque branche ou aile 7 et 8 a une section en forme de U. Ces montants 6 sont aménagés pour accueillir, dans le prolongement des côtés du coffre 5, des moyens de stockage ou magasins, pour les hameçons 3 avec ou sans les appâts.

La caisse est représentée figure 1 avec quatre magasins en forme de barrette 10, superposés. Elle comporte de la même façon, sur chacun des autres côtés, des barrettes représentées simplement en traits mixtes fins. Ces côtés à claire-voie comportent, entre les barrettes, un espace ou fenêtre 9 qui permet le passage de la ligne mère 2.

Lors du filage, la ligne mère 2 s'extrait du coffre 5 au fur et à mesure de l'avancement du bateau ; elle sort automatiquement du coffre 5 et emmène les hameçons 3 avec les avançons 4, vidant chaque barrette 10 les unes après les autres, côté par côté.

La présence des fenêtres 9 entre les barrettes 10, permet de filer la ligne de façon continue sans avoir à enlever les barrettes vides.

Lors de l'opération de halage, un opérateur peut stocker directement la ligne mère dans le coffre 5 et repositionner les hameçons 3 et les avançons 4, au fur et à mesure sur chacune des barrettes 10, dans l'ordre inverse du filage, côté par côté.

La figure 2 montre une section des montants 6. Ces montants sont en forme de cornières et chacune de leurs ailes ou branches 7, 8, a une section en forme de U pour accueillir les barrettes 10 et en particulier la partie inférieure de ces barrettes qui forme une sorte d'axe 11.

Ces axes 11 sont positionnés et calés en hauteur par rapport aux montants 6, au moyen de butées 12 qui sont par exemple constituées de simples rivets installés dans chacune des ailes 7, 8 des montants.

Pour mettre en place une barrette 10 entre deux montants 6, il suffit de la présenter inclinée en introduisant l'axe 11 d'un côté puis de l'autre côté dans le montant correspondant.

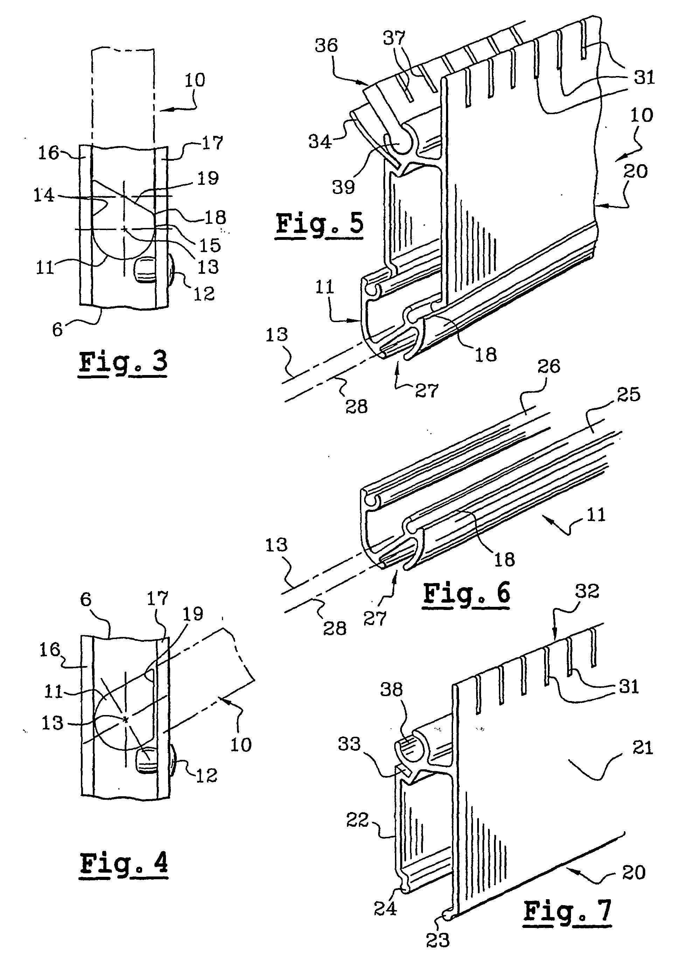

La figure 3 montre une portion de montant 6 dans lequel est intégrée une barrette 10 représentée schématiquement et partiellement en traits mixtes fins. La partie inférieure de la barrette qui forme l'axe 11, comporte une portion inférieure demi-circulaire et une portion supérieure en forme de trapèze. La portion circulaire est centrée sur l'axe 13 qui se situe dans le plan médian de la barrette 10, et le trapèze comporte une grande base 14 et une petite base 15 dans le prolongement des faces de ladite barrette, qui s'inscrivent entre les ailes 16 et 17 du montant 6.

Lors du basculement de la barrette 10 autour de l'axe 13, d'un angle de l'ordre de 60°, l'arête 18 qui est située entre le petit côté 15 du trapèze et le pan incliné 19 de ce même trapèze, force sur l'aile externe 17 du montant 6 pour passer de la position stockage de la figure 3 à la position de filage, telle que représentée figure 4, dans laquelle position la surface inclinée 19 du trapèze prend appui contre ladite aile 17 du montant 6.

Cette position de filage est stable également du fait que l'axe 11 est encastré entre les ailes 16 et 17 du montant 6.

Les mouvements de pivotement des barrettes 10 s'effectuent avec une déformation élastique des ailes 16 et 17 des montants 6, et la barrette est ainsi verrouillée entre lesdites ailes dans la position stockage et dans la position filage.

Les figures 5 à 7 montrent d'une façon plus détaillée, les profils constitutifs des barrettes 10.

Ces profilés, au nombre de deux, sont réalisés en aluminium. Le profilé 11 qui fait office d'axe, constitue une pièce d'usure interchangeable. La longueur de ce profilé est supérieure à celle du profilé 20. Le profilé 20 fait office de magasin et sa longueur est sensiblement inférieure à la distance entre deux montants 6.

Le profilé 20 comporte deux parois reliées entre elles: - une paroi externe 21 et - une paroi interne 22. La distance entre ces deux parois correspond à l'espace entre les ailes 16 et 17 des montants 6.

L'extrémité inférieure de chacune des parois 21, 22 du profilé 20 est munie de bourrelets qui coopèrent avec des rainures de forme équivalente aménagées au niveau du profilé 11 et en particulier au niveau de la surface 19 c'est-à-dire la surface inclinée du trapèze comme défini précédemment en liaison avec les figures 3 et 4.

Les bourrelets 23 et 24 du profilé 20 coopèrent avec des rainures 25 et 26 du profilé 11 respectivement.

Les profilés 11 et 20 qui constituent les barrettes 10 sont immobilisés l'un par rapport à l'autre par une sorte de pincement qui provient d'une différence d'entraxe entre les bourrelets 23 et 24 du profil supérieur 20 et les rainures 25 et 26 du profilé inférieur 11 faisant office d'axe.

On retrouve sur le profilé 11, comme représenté figures 5 et 6, l'arête 18 telle que détaillée précédemment en liaison avec les figures 3 et 4 ; cette arête 18 permet de verrouiller la position de la barrette 10 par rapport au montant 6.

Le profilé 11 comporte encore, à sa partie inférieure, au niveau de l'arrondi, un creux 27 qui permet par exemple de loger une sorte de vis, non représentée, centrée sur l'axe 28, laquelle vis permet de caler les barrettes par rapport au montant 6 et en particulier par rapport à la cloison centrale 29 dudit montant comme représenté figure 2.

Le profilé 20 comporte à son extrémité supérieure, des aménagements qui permettent de former directement ou de recevoir les différents râteliers.

L'extrémité supérieure de la paroi externe 21 du profilé 20 comporte des encoches 31 régulièrement espacées qui forment un râtelier support 32, pour loger les hameçons 3. L'intervalle entre deux encoches 31 est par exemple de l'ordre de 2 cm. La longueur de l'encoche 31 est de l'ordre de 1 à 1,5 cm.

La partie supérieure de la paroi interne 22 du profilé 20, comporte une première rainure longitudinale 33 qui permet d'encastrer, comme représenté figure 5, un râtelier 34. Ce râtelier 34 se présente sous la forme d'une bande en matériau relativement rigide, munie de fentes 35 qui se situent en face des encoches 31, pour loger et surtout pour protéger les avançons 4 lors du filage de la ligne. La largeur des fentes 35 est légèrement supérieure au diamètre des avançons 4.

Le râtelier 34 est incliné à 45° sur la paroi 22, et forme une sorte de bourrelet et de guide tremplin pour la ligne mère lors du filage.

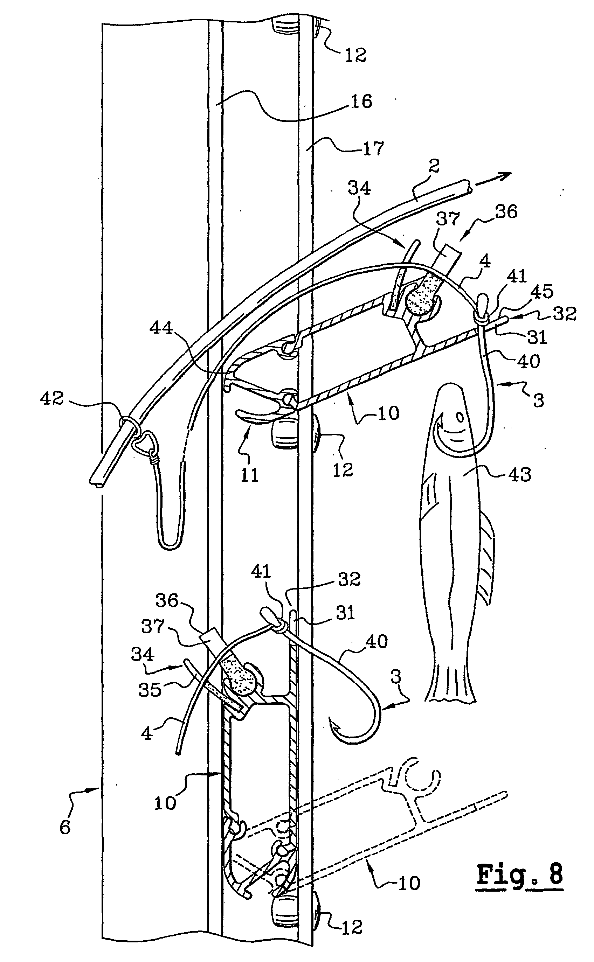

Entre les râteliers 32 et 34 on trouve le râtelier 36, figure 8, constitué d'un ruban ou bande en matériau souple du genre caoutchouc qui est munie d'incisions 37 situées dans l'alignement des encoches 31, pour loger le bas des avançons 4 et surtout les maintenir serrés dans lesdites incisions de la bande qui constituent chacune une sorte de gâchette. La traction sur l'avançon 4 provoque une ouverture de l'incision 37 dans laquelle est pincé l'avançon.

La force de pincement du bas de l'avançon 4 au niveau de l'incision 37, peut être réglée par compression ou étirement de la bande formant le râtelier 36. Cette bande peut avoir une longueur supérieure ou inférieure à celle de son logement et être calée dans ce logement par tous moyens appropriés de façon à être étirée ou comprimée dans ledit logement.

Le logement se présente sous la forme d'une rainure 38, de section circulaire ouverte, pour accueillir le bourrelet 39 situé à l'extrémité inférieure du râtelier 36. La rainure 38 est située au-dessus de la rainure 33. Le râtelier 36 est incliné vers l'intérieur de la caisse, par rapport à la paroi 22 de la barrette.

La figure 8 montre d'une façon plus détaillée, les différentes barrettes et l'installation des bas de lignes c'est-à-dire des avançons 4 et des hameçons 3 dans les râteliers.

La partie inférieure de la figure 8 montre une barrette 10 en position normale de stockage d'un bas d'avançon ; cette barrette est logée dans les montants 6 dont l'un apparaît sur ladite figure 8.

Toujours à la partie inférieure de cette figure 8, une barrette 10 est représentée en traits mixtes fins dans sa position normale de filage, voire de boëttage c'est-à-dire dans une position qui permet à un opérateur de prendre les hameçons un par un et d'y installer un appât ou boëtte.

La barrette 10 représentée à la partie inférieure de la figure 8, accueille un avançon 4 qui passe tout d'abord dans le râtelier 34 se logeant dans la fente 35, puis dans le râtelier 36, pincé dans l'incision 37, et la hampe 40 de l'hameçon 3 est positionnée dans une encoche 31 du râtelier support 32, sa pointe étant en saillie à l'extérieur de la paroi 21 de la barrette et de la caisse, alors que la palette ou le crochet dudit hameçon, est situé entre ledit râtelier 36 et ledit râtelier support 32, retenu par ce dernier.

En effet, lorsque la barrette 10 est basculée, comme représenté en haut de la figure 8, le noeud 41 entre l'hameçon 3 et l'avançon 4 permet de retenir ledit hameçon au niveau de l'encoche 31 du râtelier support 32 quelle que soit la charge accrochée audit hameçon, lequel hameçon est ainsi parfaitement stabilisé pour faire face aux mouvements du bateau.

La barrette 10 située à la partie supérieure de la figure 8 est en position inclinée pour le filage de la ligne. La ligne mère 2 apparaît sur la figure, et l'avançon 4 est lié à cette ligne mère au moyen d'un émerillon 42 par exemple. Une boëtte 43 ou appât est fixé à l'hameçon 3 ainsi que des lests ou flotteurs à intervalles réguliers.

Lors du filage de la ligne mère 2, on remarque que cette ligne mère peut glisser sur la partie arrondie 44 de l'axe 11 et sur le râtelier 34. Au fur et à mesure du filage de la ligne mère 2, l'avançon 4 quitte le râtelier 34, puis le râtelier 36 et ensuite l'hameçon est éjecté du râtelier 32, en glissant sur le support 45 qui fait office de rampe de lancement.

Les encoches 31 ont une largeur qui correspond à la largeur de la hampe 40 de l'hameçon avec une profondeur qui est suffisante pour maintenir ledit hameçon dans une position verticale pour éviter l'emmêlement avec les hameçons et appâts voisins. La longueur de la rampe de lancement du support 45 et de l'encoche 32 est de l'ordre de 10 à 15 mm pour conserver un guidage de l'hameçon lors du filage.

On remarque, figure 1, le parcours de la ligne mère 2 pour passer d'une barrette 10 à une autre. La ligne mère 2 emmène tout d'abord les appâts situés sur la barrette supérieure d'un côté de la caisse, puis les appâts de la barrette 10 immédiatement inférieure etc ... et lorsqu'un côté est terminé, on remarque que la ligne mère 2 démarre la barrette 10 supérieure d'un côté adjacent, etc ..., filant ainsi tous les hameçons qui peuvent, comme signalé auparavant, être au nombre de mille par exemple, et ceci sans avoir à démonter les barrettes qui sont vides.

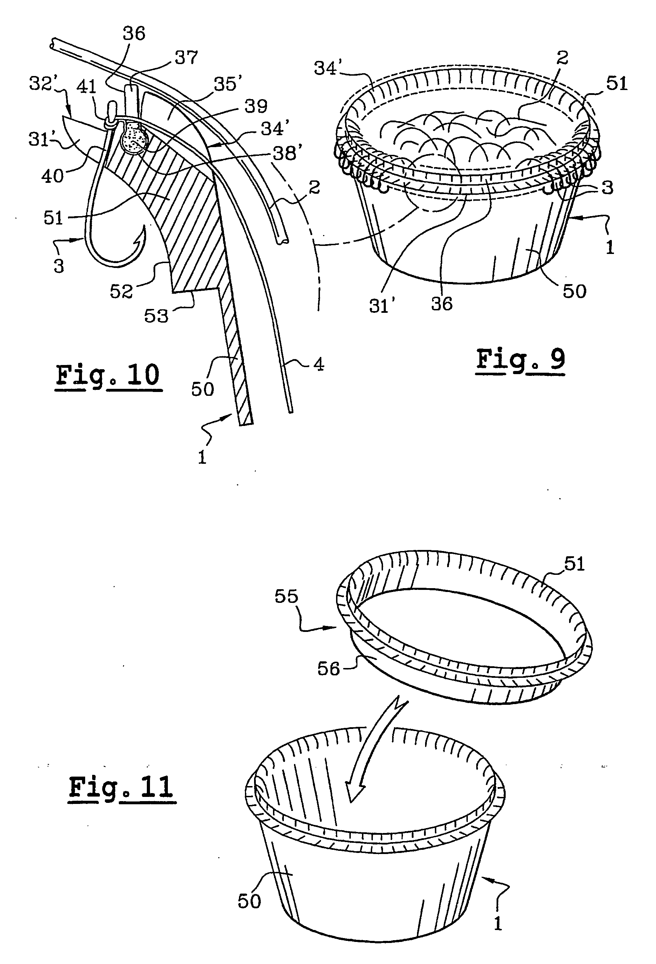

Sur l'exemple de réalisation de la figure 1, les barrettes 10 ont une forme rectiligne. La figure 9 montre une variante de réalisation dans laquelle le stockage des hameçons s'effectue sur un magasin circulaire. La caisse 1 est en fait constituée d'un bac 50 de forme générale tronconique par exemple, et sa partie supérieure ou rebord 51 se présente sous la forme d'une couronne qui est aménagée de façon à former plusieurs râteliers comme détaillé auparavant.

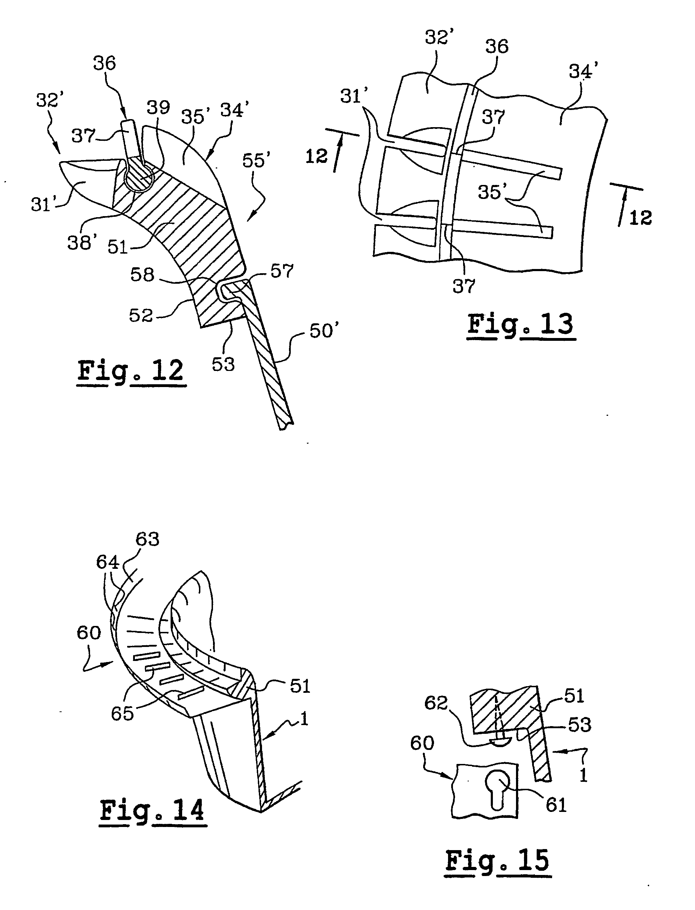

Cette caisse peut également, comme détaillé plus loin figure 12, être constituée de deux parties assemblées entre elles, réalisées en matériau thermoplastique ou à partir de résine armée de fibres.

Les râteliers de la couronne apparaissent figures 10 et 12. Le rebord supérieur 51 de la caisse, comme représenté figure 10 ou figure 12, présente une forme relativement massive ; il comporte un premier râtelier interne 34' muni de fentes 35' qui permettent de loger les avançons 4. Ce râtelier 34' a un profil arrondi formant une sorte de voûte pour servir de guide et de tremplin à la ligne mère 2.

Les fentes 35' réalisées au niveau du râtelier 34' ont une largeur qui est du même ordre que le diamètre de l'avançon 4, nettement inférieure au diamètre de la ligne mère.

Derrière le râtelier 34', en allant vers l'extérieur c'est-à-dire vers l'aval, on trouve le râtelier 36 constitué d'une bande souple en matériau du genre caoutchouc. Ce râtelier 36 est identique au râtelier utilisé sur les barrettes 10 et comporte un bourrelet 39 qui se loge dans une rainure 38' de forme complémentaire aménagée dans le rebord 51. Les incisions 37 permettent de maintenir le bas de l'avançon 4 et de stabiliser la position de l'hameçon 3 sur son râtelier support 32'.

Le choix de la longueur de la bande formant le râtelier 36, permet de comprimer plus ou moins cette bande dans la rainure 38', et de modifier à volonté l'effort de serrage des avançons 4 dans les incisions 37.

Le râtelier 36 vient directement derrière le râtelier 34' et précède le râtelier support 32' aménagé à la périphérie externe du rebord 51. Ce râtelier 32' comporte des encoches 31' dont la largeur permet de loger la hampe 40 des hameçons 3, laquelle largeur correspond sensiblement au diamètre desdites hampes 40.

Ce râtelier 32' et les encoches 31' ont par exemple une longueur de l'ordre de 10 à 15 mm de façon à réaliser là aussi une sorte de rampe de lancement, tout en faisant office de support pour les hameçons 3 et les appâts éventuels. En effet, la palette ou crochet de l'hameçon 3, avec le noeud 41, permet de retenir l'hameçon, suspendu par le râtelier support 32', autorisant aussi un mouvement pendulaire pour l'opération de boëttage.

On remarque que la surface de la paroi externe 52 du rebord 51 est une surface arrondie et lisse. Cette surface est également très dure par la nature du matériau utilisé et permet à la pointe de l'hameçon 3 de glisser, sans risque de s'accrocher lors de l'opération de filage.

Le rebord 51 a une épaisseur supérieure à la paroi du bac 50 de façon à former un épaulement 53 qui permet notamment d'empiler les caisses les unes sur les autres. Ce rebord permet aussi de fixer une tablette de boëttage comme détaillé plus loin en liaison avec les figures 14 et 15.

Le magasin et ses râteliers peuvent être aménagés directement à la partie supérieure d'un bac 50. On remarque, figure 11, que le magasin peut aussi se présenter sous la forme d'une simple couronne 55 constituée - du rebord 51 et - d'une ceinture 56 correspondant à la partie supérieure du bac 50.

Ce magasin couronne 55 présente l'avantage de pouvoir s'emboîter sur la partie supérieure d'une caisse munie elle aussi d'un magasin circulaire au niveau de sa bordure supérieure de même que l'on peut superposer plusieurs magasins 55 en forme de couronne sur une même caisse pour accroître les capacités de stockage d'hameçons. Le filage de la ligne s'effectue tout d'abord au niveau des magasins supérieurs, lesquels sont enlevés au fur et à mesure qu'ils sont vides.

Lors du halage de la ligne, la ligne est rangée en installant tout d'abord les hameçons et avançons sur le rebord de la caisse puis, sur un premier magasin en forme de couronne 55, etc... selon les besoins.

La figure 12 représente une variante de réalisation de la caisse qui comprend un bac 50' et une couronne 55' solidarisés ensemble au moyen d'une sorte d'encliquetage. Le rebord supérieur du bac 50' comporte une sorte de bourrelet périphérique 57, qui se loge dans une rainure circulaire 58 aménagée sur la partie inférieure interne de la couronne 55'.

Cette caisse en deux parties, permet d'utiliser des matériaux différents pour le bac et pour la couronne. Le bac peut être réalisé en matériau thermoplastique moulé ou thermoformé, et la couronne réalisée en matériau plus rigide, comme de la résine armée de fibres ou autre.

La figure 13 montre une portion de la couronne 55' représenté figure 12. On retrouve le râtelier 34' muni des fentes 35'. Ce râtelier 34' est suivi du râtelier 36 constitué de la bande souple en caoutchouc, laquelle bande est munie des incisions 37 qui permettent de maintenir le bas des avançons.

Enfin, on trouve le râtelier support 32' muni des encoches 31'.

Pour améliorer la rigidité du râtelier 32' qui se présente sous la forme de dents, l'épaisseur de matière au centre peut être, comme représenté figures 12 et 13, plus importante qu'au niveau des encoches 31'.

La figure 14 représente une portion de la caisse circulaire 1 équipée d'une tablette de boëttage. Cette tablette 60 se présente sous la forme d'une couronne qui vient se positionner et s'agrafer sous le rebord 51, sur l'épaulement 53. Ce plateau 60 comporte, comme représenté figure 15, des orifices 61 du type trou à oeil, qui permettent de l'engager sur des vis 62 régulièrement réparties sous l'épaulement 53.

Ainsi, cette tablette 60 fait office d'accessoire, elle est amovible et peut être positionnée selon les besoins.

Cette tablette comporte une ceinture extérieure 63 en forme de râtelier, munie d'encoches 64 qui permettent par exemple de positionner des lests ou flotteurs, accrochés aux hameçons 3 en lieu et place des appâts.

De même, la surface supérieure de cette tablette 60 peut comporter des cloisons séparatrices 65 disposées radialement, pour séparer et maintenir les appâts, qu'il s'agisse d'appâts vivants ou d'appâts glacés.

## Revendications

1. Caisse de rangement et/ou de préparation de ligne palangre, comportant des moyens de stockage des hameçons (3), qui sont constitués : - d'un râtelier support rigide (32, 32') muni d'encoches (31, 31') ou fentes qui permettent de loger la hampe (40) de chaque hameçon (3) de façon à le suspendre par son crochet ou par le noeud, et - d'un râtelier (36) qui comprend une bande souple en matériau du genre caoutchouc, muni d'incisions (37), de façon à maintenir par pincement l'extrémité des avançons (4) de ladite ligne, à proximité desdits hameçons.

2. Caisse selon la revendication 1, **caractérisée en ce que** l'encoche (31, 31') réalisée dans le râtelier support (32, 32'), a une largeur qui correspond sensiblement au diamètre de la hampe (40) de l'hameçon (3), sa hauteur est telle qu'elle permet de maintenir et guider ladite hampe dans un plan vertical, et sa longueur est par exemple de l'ordre de 10 à 15 mm.

3. Caisse selon l'une quelconque des revendications 1 ou 2, **caractérisée en ce que** les moyens de stockage comportent en plus, en avant du râtelier (36) et disposé sur la partie interne de la caisse, un râtelier (34, 34') en forme de peigne, dont les fentes correspondent au diamètre des avançons (4) pour y loger et protéger ces derniers lors du filage de la ligne (2), lequel râtelier (34, 34') fait également office de surface de guidage et de tremplin pour la ligne mère (2).

4. Caisse selon l'une quelconque des revendications 1 à 3, **caractérisée en ce que** d'une part, elle est constituée d'un coffre parallélépipédique (5) et de montants (6) qui s'étendent verticalement à chaque angle dudit coffre, lesquels montants sont en forme de cornières dont chaque aile a une section en forme de U et **en ce que**, d'autre part, les moyens de stockage sont en forme de barrettes (10) rectilignes, chaque barrette (10) est munie à ses extrémités de moyens de positionnement et de guidage sur lesdits montants (6), lesquels moyens de guidage sont constitués d'un axe (11) permettant d'installer ladite barrette soit dans le plan de la paroi correspondante dudit coffre, soit dans une position inclinée pour le filage, avec une inclinaison de l'ordre de 60° par rapport à la verticale, dégageant ainsi une ouverture ou fenêtre (9) qui permet le passage de la ligne mère (2) sans avoir à retirer lesdites barrettes lorsqu'elles sont vides, chaque barrette (10) comporte également, à sa partie supérieure, les moyens de stockage et de rangement des hameçons (3) et avançons (4), lesquels moyens sont constitués - du râtelier (36) en forme de bande souple, laquelle bande souple est disposée entre le râtelier support (32) aménagé sur la paroi externe (21) de ladite barrette, et - un autre râtelier (34) disposé sur la paroi interne (22) de ladite barrette.

5. Caisse selon la revendication 4, **caractérisée en ce que** les barrettes (10) sont réalisées en aluminium et sont constituées de deux profilés : un profilé supérieur (20) qui permet le stockage et le rangement des hameçons (3) avec les avançons (4), et un profilé inférieur (11) qui fait office d'axe, coopérant avec les montants (6), lequel profilé (11) est aménagé pour placer lesdites barrettes dans deux positions stables et verrouillées : une position stable verticale, dans le plan des parois de la caisse et une position stable pour le filage de la ligne, inclinée à 60° environ par rapport à la position verticale, le passage d'une position à l'autre étant obtenu par une déformation élastique des ailes desdits montants, provoquée par ledit profilé (11).

6. Caisse de rangement et/ou de préparation de ligne palangre selon la revendication 4, **caractérisée en ce que** le râtelier (36), qui maintient l'extrémité des avançons (4) par pincement, est associé à des moyens de réglage de la force de pincement, lesquels moyens agissent sur la bande souple pour la comprimer ou pour l'étirer selon les besoins, afin de modifier l'effort de pincement des incisions (37), lesquels moyens consistent par exemple en un calage de ladite bande dans son logement après un choix approprié au niveau de sa longueur.

7. Caisse selon l'une quelconque des revendications 1 à 4, **caractérisée en ce qu'**elle est constituée d'un bac (50) circulaire muni de moyens de stockage des hameçons (3) qui sont aménagés au niveau du rebord supérieur (51) dudit bac, lesquels moyens de stockage comprennent: - un râtelier (36) en forme de bande souple en matériau du genre caoutchouc, logé dans une rainure circulaire ouverte sur le dessus, laquelle bande est munie d'incisions (37) pour loger le bas de l'avançon (4) et, - d'une part, à l'extérieur dudit râtelier (36), un râtelier support (32'), massif, façonné directement au niveau dudit rebord (51) pour suspendre lesdits hameçons et, - d'autre part, à l'intérieur de la caisse par rapport audit râtelier (36), un autre râtelier (34') aménagé sur le rebord interne et muni de fentes (35'), pour loger les avançons (4), formant en plus une surface de guidage et un tremplin pour la ligne mère (2).

8. Caisse selon la revendication 7, **caractérisée en ce que** la rainure fendue (38') permettant de loger le râtelier (36) en forme de bande souple, comporte une entrée en forme de rampe qui permet de glisser le bourrelet (39) de ladite bande et de l'enfiler dans ladite rainure sur tout le pourtour du rebord de la caisse, laquelle bande a une longueur qui peut être choisie de façon à régler l'effort de serrage des bas d'avançons, au niveau des incisions (37), lequel effort de serrage est plus ou moins important selon la compression de ladite bande dans ladite rainure (38').

9. Caisse selon la revendication 7, **caractérisée en ce que** la paroi externe de la bordure de la caisse, sous le râtelier support (32), est aménagée sous la forme d'une paroi très lisse et très dure afin d'éviter tout risque d'accrochage accidentel de la pointe de l'hameçon (3), laquelle paroi s'étend sur une hauteur supérieure à la longueur des hameçons utilisés.

10. Caisse selon l'une quelconque des revendications 7 à 9, **caractérisée en ce qu'**elle est constituée de deux parties : une partie 50' formant le bac proprement dit et une partie en forme de couronne 55' qui comporte des moyens en forme de rainure 58 coopérant avec un rebord périphérique 57 aménagé à la partie supérieure du bac, lequel rebord se loge dans ladite rainure.

11. Caisse selon l'une quelconque des revendications 1 à 10 **caractérisée en ce qu'**elle comporte une tablette ou couronne de boëttage (60), munie sur sa périphérie, d'un râtelier (63) servant de support pour des lests ou pour des flotteurs, et/ou de cloisons (65) qui forment des logements destinés aux appâts vivants ou glacés.

## Patentansprüche

1. Kasten zum Verstauen und/oder zum Fertigmachen von Langleinen, umfassend Mittel zur Lagerung der Angelhaken (3), die gebildet sind von: - einem starren Stützgestell (32, 32'), das mit Kerben (31, 31') oder Schlitzen versehen ist, die es ermöglichen, den Schaft (40) jedes Angelhakens (3) unterzubringen, so dass er mit seinem Haken oder mit dem Knoten aufgehängt wird, und - einem Gestell (36), das ein weiches Band aus einem Material von der Art Kautschuk umfasst und mit Einschnitten (37) versehen ist, um durch Festklemmen das Ende der Vorfächer (4) der Leine in der Nähe der Haken zu halten.

2. Kasten nach Anspruch 1, **dadurch gekennzeichnet, dass** die Kerbe (31, 31'), die in dem Stützgestell (32, 32') ausgeführt ist, eine Breite hat, die im Wesentlichen dem Durchmesser des Schafts (40) des Hakens (3) entspricht, wobei ihre Höhe derart ist, dass sie es ermöglicht, den Schaft in einer Vertikalebene zu halten und zu führen, und wobei ihre Länge beispielsweise ungefähr 10 bis 15 mm beträgt.

3. Kasten nach einem der Ansprüche 1 oder 2, **dadurch gekennzeichnet, dass** die Mittel zur Lagerung ferner, vorne am Gestell (36) und auf dem inneren Teil des Kastens angeordnet, ein Gestell (34, 34') in Form eines Kamms umfassen, dessen Schlitze dem Durchmesser der Vorfächer (4) entsprechen, um hier diese letztgenannten beim Ziehen der Leine (2) unterzubringen und zu schützen, wobei das Gestell (34, 34') auch als Führungs- und Abwurffläche für die Hauptleine (2) dient.

4. Kasten nach einem der Ansprüche 1 bis 3, **dadurch gekennzeichnet, dass** er einerseits von einer paralielflachen Kassette (5) und Ständern (6) gebildet ist, die sich vertikal zu jedem Winkel der Kassette erstrecken, wobei die Ständer die Form von Winkeleisen haben, von denen jeder Flügel einen U-förmigen Querschnitt aufweist, und dass andererseits die Lagerungsmittel die Form von geraden Stäben (10) haben, wobei jeder Stab (10) an seinen Enden mit Mitteln zur Positionierung und Führung auf den Ständern (6) versehen ist, wobei die Führungsmittel von einer Achse (11) gebildet sind, die es ermöglicht, den Stab entweder in der Ebene der entsprechenden Wand der Kassette oder in einer geneigten Position zum Ziehen mit einer Neigung von ungefähr 60° zur Vertikalen einzubauen, wodurch eine Öffnung oder ein Fenster (9) freigegeben wird, das den Durchgang der Hauptleine (2) ermöglicht, ohne die Stäbe zurückziehen zu müssen, wenn sie leer sind, wobei jeder Stab (10) auch an seinem oberen Teil die Mittel zur Lagerung und zum Verstauen der Haken (3) und Vorfächer (4) umfasst, wobei die Mittel gebildet sind: - von dem Gestell (36) in Form eines weichen Bandes, wobei das weiche Band zwischen dem Stützgestell (32) angeordnet ist, das an der äußeren Wand (21) des Stabs vorgesehen ist, und - von einem weiteren Gestell (34), das an der Innenwand (22) des Stabs angeordnet ist.

5. Kasten nach Anspruch 4, **dadurch gekennzeichnet, dass** die Stäbe (10) aus Aluminium hergestellt sind und aus zwei Profilen bestehen: einem oberen Profil (20), das die Lagerung und das Verstauen der Haken (3) mit den Vorfächern (4) ermöglicht, und einem unteren Profil (11), das als Achse dient, die mit den Ständern (6) zusammenwirkt, wobei das Profil (11) derart angeordnet ist, dass die Stäbe in zwei stabilen und verriegelten Positionen angeordnet werden: einer stabilen vertikalen Position in der Ebene der Wände des Kastens und einer stabilen Position zum Ziehen der Leine, die 60° in Bezug auf die vertikale Position geneigt ist, wobei der Übergang von einer Position in die andere durch eine elastische Verformung der Flügel der Ständer erzielt wird, die durch das Profil (11) hervorgerufen wird.

6. Kasten zum Verstauen und/oder zum Fertigmachen von Langleinen nach Anspruch 4, **dadurch gekennzeichnet, dass** das Gestell (36), das das Ende der Vorfächer (4) durch Festklemmen hält, mit Mitteln zur Einstellung der Festklemmkraft verbunden ist, wobei diese Mittel auf das weiche Band einwirken, um es zusammenzudrücken oder auszudehnen, je nach Bedarf, um die Festklemmkraft der Einschnitte (37) zu verändern, wobei diese Mittel beispielsweise in einer Verkeilung des Bandes in seiner Lagerung nach einer entsprechenden Wahl im Bereich seiner Länge bestehen.

7. Kasten nach einem der Ansprüche 1 bis 4, **dadurch gekennzeichnet, dass** es von einem kreisförmigen Behälter (50) gebildet ist, der mit Mitteln zur Lagerung der Haken (3) versehen ist, die im Bereich des oberen Randes (51) des Behälters angeordnet sind, wobei die Lagerungsmittel umfassen: - ein Gestell (36) in Form eines weichen Bandes aus einem Material von der Art Kautschuk, das in einer kreisförmigen oben offeneh Nut angeordnet ist, wobei das Band mit Einschnitten (37) versehen ist, um den unteren Teil des Vorfachs (4) unterzubringen, und - andererseits außerhalb des Gestells (36) ein massives Stützgestell (32'), das direkt im Bereich des Randes (51) ausgebildet ist, um die Haken aufzuhängen, und - andererseits innerhalb des Kastens in Bezug auf das Gestell (36) ein weiteres Gestell (34'), das auf dem inneren Rand angeordnet und mit Schlitzen (35') versehen ist, um die Vorfächer (4) unterzubringen, und das ferner eine Führungs- und Abwurffläche für die Hauptleine (2) bildet.

8. Kasten nach Anspruch 7, **dadurch gekennzeichnet, dass** die geschlitzte Nut (38'), die es ermöglicht, das Gestell (36) in Form eines weichen Bandes unterzubringen, einen Eingang in Form einer Rampe umfasst, die es ermöglicht, den Wulst (39) des Bandes gleiten zu lassen und es in die Nut auf dem gesamten Umfang des Randes des Kastens einzuführen, wobei das Band eine Länge hat, die derart gewählt werden kann, dass die Klemmkraft der Vorfachunterteile im Bereich der Einschnitte (37) eingestellt wird, wobei die Klemmkraft je nach Zusammendrücken des Bandes in der Nut (38') mehr oder weniger groß ist.

9. Kasten nach Anspruch 7, **dadurch gekennzeichnet, dass** die äußere Wand des Randes des Kastens unter dem Stützgestell (32) in Form einer sehr glatten und sehr harten Wand ausgeführt ist, um jede Gefahr des zufälligen Festhakens der Spitze des Angelhakens (3) zu vermeiden, wobei sich diese Wand auf einer Höhe erstreckt, die größer als die Länge der verwendeten Haken ist.

10. Kasten nach einem der Ansprüche 7 bis 9, **dadurch gekennzeichnet, dass** er aus zwei Teilen besteht: einem Teil (50'), der den eigentlichen Behälter bildet, und einem Teil in Kranzform (55'), der Mittel in Form einer Nut (58) umfasst, die mit einem Umfangsrand (57) zusammenwirken, der am oberen Teil des Behälters vorgesehen ist, wobei sich der Rand in der Nut befindet.

11. Kasten nach einem der Ansprüche 1 bis 10, **dadurch gekennzeichnet, dass** er eine Tafel oder einen Kranz für Köder (60), die/der an seinem Umfang mit einem Gestell (63) versehen ist, das als Stütze für Ballast oder für Schwimmer dient, und/oder Trennwände (65) umfasst, die Aufnahmen für die lebenden oder tiefgekühlten Köder bilden.

## Claims

1. A box for storing and/or preparing long line, comprising means for storing fish hooks (3), which consist : - of a rigid supporting rack (32, 32') fitted with notches (31, 31') or slots which enable to house the shank (40) of each fish hook (3) in order to hang it by its hook or by the knot, and - of a rack (36) which comprises a flexible band of rubber type material, fitted with incisions (37), in order to pinch the end of the branches (4) of said line in place, close to said fish hooks.

2. A box according to claim 1, **characterised in that** the notch (31, 31') made in the supporting rack (32, 32'), has a width which corresponds substantially to the diameter of the shank (40) of the fish hook (3), its height is such that it enables to maintain and guide said shank in a vertical plane, and its length is for instance of the order of 10 to 15 mm.

3. A box according to any one of claims 1 or 2, **characterised in that** the storage means comprise moreover, ahead of the rack (36) and arranged on the inner portion of the box, a rack (34, 34') in the form of a comb, whereof the slots correspond to the diameter of the branches (4) for housing therein and protecting the latter when spinning the line (2), which rack (34, 34') also serves as a guiding surface and as a springboard for the master line (2).

4. A box according to any one of claims 1 to 3, **characterised in that** on the one hand, it is made of a parallelepiped casing (5) and of stanchions (6) which extend vertically at each angle of said casing, which stanchions are in the form of angle brackets whereof each wing has a U-shaped section and **in that**, on the other hand, the storage means are in the form of rectilinear bars (10), each bar (10) is fitted at its ends with positioning and guiding means on said stanchions (6), which guiding means consist of a pin (11) enabling to mount said bar either in the plane of the corresponding wall of said casing, or in a tilted position for spinning, with a tilt of the order of 60° with respect to the vertical, thereby clearing a aperture or window (9) which enables to let through the master line (2) without needing to withdraw said bars when they are empty, each bar (10) also comprises, at its upper section, the means for storing and keeping fish hooks (3) and branches (4), which means consist - of the rack (36) in the form of flexible band, which flexible band is arranged between the supporting rack (32) provided on the outer wall (21) of said bar, and - another rack (34) arranged on the inner wall (22) of said bar.

5. A box according to claim 4, **characterised in that** the bars (10) consist of aluminium and are made of two profiles : an upper profile (20) which enables to store and to keep fish hooks (3) with the branches (4), and a lower profile (11) which serves as a pin, co-operating with the stanchions (6), which profile (11) is provided to place said bars into two stable and locked positions: a stable vertical position, in the plane of the walls of the box and a position stable for spinning the line, tilted to about 60° with respect to the vertical position, switching from one position to the other being obtained by elastic deformation of the wings of said stanchions, caused by said profile (11).

6. A box for storing and/or preparing a long line according to claim 4, **characterised in that** the rack (36), which pinches the end of the branches (4) in place, is associated with means for adjusting the pinching load, which means act on the flexible band to compress the latter or to stretch the latter to suit the requirements, in order to modify the pinching load of the incisions (37), which means consist for instance in locking said band in its housing after appropriate selection of its length.

7. A box according to any one of claims 1 to 4, **characterised in that** it is made of a circular tub (50) fitted with means for storing fish hooks (3) which are provided at the upper rim (51) of said tub, which storage means comprise : - a rack (36) in the form of a flexible band of rubber type material, accommodated in an open circular groove on the top, which band is fitted with incisions (37) to house the bottom of the branch (4) and, - on the one hand, outside said rack (36), a compact supporting rack (32'), added on directly to said rim (51) for hanging said fish hooks and, - on the other hand, inside the box with respect to said rack (36), another rack (34') provided on the inner rim and fitted with slots (35'), for housing the branches (4), forming moreover a guiding surface and a springboard for the master line (2).

8. A box according to claim 7, **characterised in that** the split groove (38') enabling to house the rack (36) in the form of a flexible band, comprises an inlet in the form of a ramp which enables to slide the bead (39) of said band and to thread the latter into said groove on the whole circumference of the rim of the box, which band has a length which may be selected in order to adjust the clamping load of the bottom of the branches, at the incisions (37), which clamping load is more or less important according to the compression of said band in said groove (38').

9. A box according to claim 7, **characterised in that** the outer wall of the edge of the box, under the supporting rack (32), is provided in the form of a very smooth and very hard wall in order to prevent any risk of catching accidentally the tip of the fish hook (3), which wall extends over a height greater than the length of the fish hooks used.

10. A box according to any one of claims 7 to 9, **characterised in that** it is made of two parts : a part 50' forming the tub properly speaking and a part in the form of a crown 55' which comprises means in the form of a groove 58 co-operating with a peripheral rim 57 provided at the upper section of the tub, which rim is accommodated in said groove.

11. A box according to any one of the claims 1 to 10 **characterised in that** it comprises a baiting plate or crown (60), fitted on its periphery, of a rack (63) acting as a prop for ballasts or for floats, and/or as partitions (65) which form housings intended for live or frozen baits.
